Europäisches Patentamt

**European Patent Office**

Office européen des brevets

(11) Veröffentlichungsnummer : **0 022 283**
**B2**

(12) **NEUE EUROPÄISCHE PATENTSCHRIFT**

(45) Veröffentlichungstag der neuen Patentschrift :
06.05.87

(51) Int. Cl.⁴ : **A 01 B 61/00**, A 01 D 34/64

(21) Anmeldenummer : 80200530.6

(22) Anmeldetag : 09.06.80

(54) Einrichtung zum Verhindern von Überbeanspruchung der Verbindung zwischen zwei Gestellteilen einer landwirtschaftlichen Maschine.

(30) Priorität : 05.07.79 NL 7905254

(43) Veröffentlichungstag der Anmeldung :
14.01.81 Patentblatt 81/02

(45) Bekanntmachung des Hinweises auf die Patenterteilung : 06.04.83 Patentblatt 83/14

(45) Bekanntmachung des Hinweises auf die Entscheidung über den Einspruch : 06.05.87 Patentblatt 87/19

(84) Benannte Vertragsstaaten :
AT DE FR NL

(56) Entgegenhaltungen :
DE-A- 1 582 292
DE-B- 1 582 356
FR-A- 1 463 175
FR-A- 2 118 474
GB-A-   955 745
NL-A- 7 306 705
NL-A- 7 805 731
US-A- 3 390 515
Landbouwmechanisatie, April 1979, Jahrgang 30, Nr. 4, Seite 389, Prospekt "PZ Faiazet 185"

(73) Patentinhaber : Zweegers, Petrus Wilhelmus
Nieuwendijk 46
NL-5662 AG Geldrop (NL)

(72) Erfinder : Zweegers, Petrus Wilhelmus
Nieuwendijk 46
NL-5662 AG Geldrop (NL)

(74) Vertreter : Noz, Franciscus Xaverius, Ir. et al
Boschdijk 155
NL-5612 HB Eindhoven (NL)

## Beschreibung

Die Erfindung bezieht sich auf eine Einrichtung zum Verhindern der Überbeanspruchung der Verbindung zwischen zwei Gestellteilen einer an eine Zugmaschine ankuppelbaren, landwirtschaftlichen Maschine, die einen ersten und einen zweiten die Bearbeitungswerkzeuge tragenden Gestellteil aufweist, wobei der erste Gestellteil an die Zugmaschine ankuppelbar ist, sich nach der Ankupplung horizontal quer zur Fahrtrichtung erstreckt und an einem Ende mit einer sich aufwärts erstreckenden, ersten Schwenkwelle derart mit einem Ende des zweiten Gestellteils verbunden ist, dass der zweite Gestellteil, der in Betriebszustand die axiale Verlängerung des ersten Gestellteils bildet, sich bei Überschreitung einer entgegen der Fahrtrichtung auf es wirkenden Kraft entgegen der Fahrtrichtung nach hinten wegschwenkt.

Eine derartige Einrichtung ist zu entnehmen aus der älteren, nicht vor veröffentlichten NL-A-7 805 731 ; deren Gegenstand durch offfenkundige Vorbenutzung zum Stand der Technik gehört. An sich befriedigt eine derartige Einrichtung ganz gut, da, wenn dabei in Betrieb der zweite Gestellteil gegen einen auf dem Acker stehenden Gegenstand oder dergleichen stösst, dieser zweite Gestellteil gegenüber dem an die Zugmaschine festgekuppelten, ersten Gestellteil nach hinten ausweichen kann um eine Beschädigung der Maschine zu verhüten. In der Praxis hat sich jedoch ergeben, dass wenn der zweite Gestellteil gegen einen. Gegenstand stösst an einer Stelle, die verhältnismässig nah an der sich aufwärts erstreckenden Schwenkwelle liegt, die Möglichkeit vorliegt, dass der zweite Gestellteil sich nicht in der beabsichtigten Weise in bezug auf den ersten Gestellteil um die aufwärts gerichtete Schwenkwelle verschwenkt, wobei infolge der auftretenden Trägheitskräfte eine Verformung des zweiten Gestellteils auftreten kann.

Die Erfindung bezweckt eine landwirtschaftliche Maschine vorerwähnter Art zu schaffen, wobei der vorstehend beschriebene Nachteil vermieden werden kann.

Gemäss der Erfindung kann dies dadurch bewerkstelligt werden, dass die Bearbeitungswerkzeuge an einem Tragbalken befestigt sind, der in seinem mittleren Bereich am zweiten Gestellteil mit einer sich aufwärts erstreckenden, zweiten Schwenkwelle schwenkbarangekuppelt ist, wobei ein Federmechanismus so zwischen dem zweiten Gestellteil und dem Tragbalken angeordnet ist, dass der Tragbalken durch die Federkraft parallel zu den Gestellteilen ausgerichtet wird und eine auf die zwischen der zweiten Schwenkwelle und dem ersten Gestellteil liegende Seite des Tragbalkens entgegen der Fahrtrichtung wirkende Kraft ein Verschwenken dieser Seite des Tragbalkens entgegen der Fahrtrichtung nach hinten und somit der anderen Seite des Tragbalkens in Fahrtrichtung nach vorne entgegen der Federkraft bewirkt.

Bei Verwendung der Konstruktion nach der Erfindung kann also der Tragbalken auch ausweichen, wenn der Tragbalken stösst gegen einen Gegenstand an einem verhältnismässig nah der ersten Schwenkwelle liegenden Punkt, so dass auch dann unerwünschte Beschädigung der landwirtschaftlichen Maschine verhütet werden kann.

Bemerkt wird, dass aus der NL-A-7 306 705 eine landwirtschaftliche Maschine bekannt ist, die ein erstes an einer Zugmaschine ankuppelbares Gestellteil aufweist, sowie ein zweites die Bearbeitungswerkzeuge tragendes Gestellteil, wobei ein Ende des zweiten Gestellteils mit einer sich aufwärts erstreckenden Schwenkwelle mit dem ersten Gestellteil gekuppelt ist. Dabei ist eine Strebe vorgesehen um zu verhüten, dass in der Arbeitslage. die beiden Gestellteile um die Schwenkwelle gegenüber einander verschwenken. Nach dem Lösen der Strebe kann das zweite Gestellteil gegenüber dem ersten Gestellteil nach hinten in eine Transportlage verschwenkt werden und in dieser Transportlage wieder mit der Strebe gegen Verschwenkung um die Schwenkwelle festgelegt werden. Ein Verschwenken des die Bearbeitungswerkzeuge tragenden Gestellteils unter Einfluss der auf dieses Gestellteil in Betrieb ausgeübten Kräfte ist aber bei dieser bekannten Vorrichtung nicht möglich.

Die Erfindung wird nachstehend anhand einer in beiliegenden Figuren schematisch dargestellten Ausführungsform einer Vorrichtung nach der Erfindung näher erläutert.

Es zeigen :

Figur 1 schematisch eine Draufsicht auf eine landwirtschaftliche Maschine nach der Erfindung ;

Figur 2 schematisch einen Schnitt längs der Linie II-II in Fig. 1 ;

Figur 3 in vergrössertem Massstab den bei der Vorrichtung nach Fig. 1 und Fig. 2 verwendeten Federmechanismus.

Als Ausführungsbeispiel einer landwirtschaftlichen Maschine bei der die Einrichtung nach der vorliegenden Erfindung verwendbar ist, zeigen die Figuren eine Mähmaschine entsprechend der älteren NL-A-7 805 731. Die dargestellte Maschine enthält ein erstes, mit einem Schlepper oder dergleichen zu kuppelndes Gestellteil 1, das einen hohlen, in normalem Betrieb quer zur Fahrtrichtung der Mähmaschine verlaufenden, horizontalen Tragbalken 2 enthält, an dem an sich bekannte Anschlussorgane 3 zur Ankupplung der Mähmaschine an der Hebevorrichtung einer Zugmaschine befestigt sind. Ferner ist am Tragbalken 2 ein Zahnradgehäuse 4 befestigt, das mit einer Eingangswelle 5, die in üblicher Weise durch eine Hilfswelle mit der Zapfwelle der Zugmaschine gekuppelt werden kann, und mit einer Ausgangswelle versehen ist, durch die weiter unten zu beschreibenden durch Mähscheiben gebildeten Bearbeitungswerkzeuge der Mähmaschine angetrieben werden können.

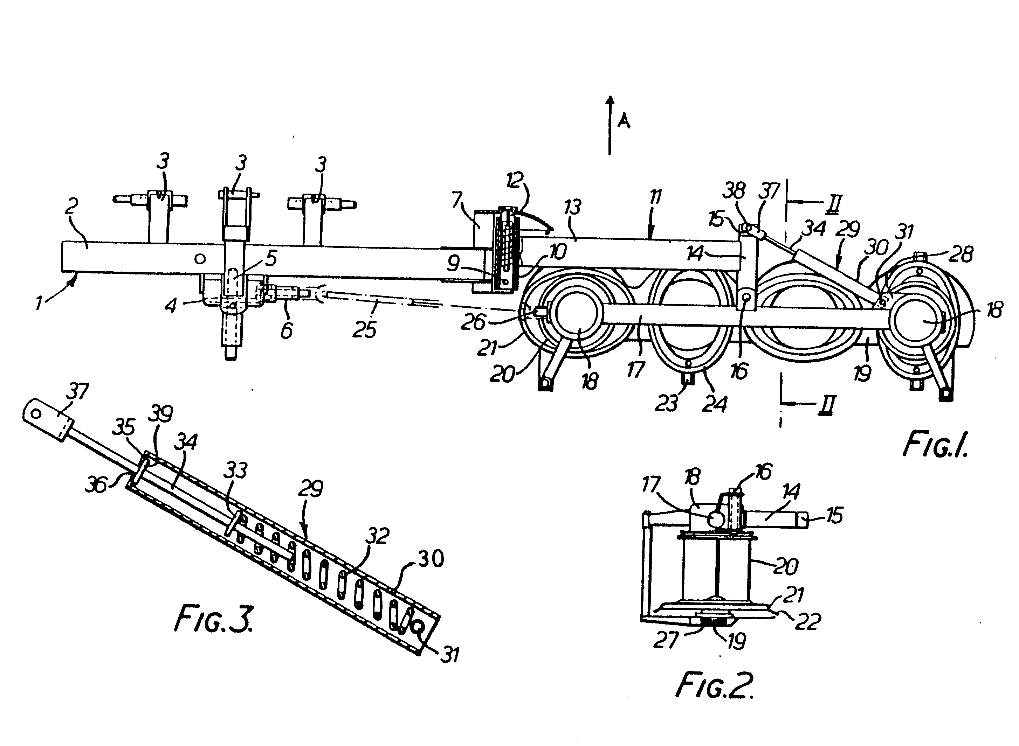

An einem Ende des Tragbalkens 2 ist eine Stütze 7 befestigt mit der durch eine senkrecht zum Erdboden angeordnete Schwenkwelle 9 ein Kupplungsorgan 10 gekuppelt ist, mit dessen Hilfe ein Ende eines zweiten Gestellteils 11 um die vertikale Schwenkwelle 9 verschwenkbar mit dem ersten Gestellteil 1 gekuppelt ist. Die beiden Gestellteile 1 und 11 werden mit Hilfe eines federbelasteten Verriegelungsmechanismus 12 vor Verdrehung um die Schwenkwelle 9 in der in Fig. 1 angegebenen Stellung gehalten, wobei dieser Verriegelungsmechanismus 12 derart ausgebildet ist, dass wenn in Betrieb auf das zweite Gestellteil 11 eine bestimmte Kraft in einer der beabsichtigten Fahrtrichtung in Betrieb entgegengesetzten Richtung nach Pfeil A ausgeübt wird, das Gestellteil 11 nach dem Überwinden der vom Verriegelungsmechanismus 12 ausgeübten Verriegelungskraft um die Schwenkwelle 9 rückwärts verschwenken kann.

Das zweite Gestellteil 11 enthält einen Tragbalken 13 von dem ein Ende am Kupplungsorgan 10 befestigt ist, während am anderen Ende eine zum Balken 13 senkrechte, horizontale Buchse 14 angebracht ist, in der eine auf beiden Seiten aus der Buchse herausragende Welle 15 gelagert ist. Mit dem hinteren Ende der Welle 15 ist mittels einer zweiten, senkrechten Schwenkwelle 16 ein sich in normalem Betrieb in Draufsicht parallel zum Tragbalken 13 erstreckender Tragbalken 17 in seinem mittleren Bereich gekuppelt. An den Enden des Tragbalkens 17 sind Zahnradgehäuse 18 angebracht. In diesen Zahnradgehäusen sind die oberen Enden nach unten verlaufender Wellen gelagert, deren untere Enden von einem zum Tragbalken 17 parallelen, hohlen, flachen Kasten 19 abgestützt werden. Diese Wellen werden von mit den Wellen verbundenen Trommeln 20 umgeben, an deren Unterseiten Bearbeitungswerkzeuge bildende Mähscheiben 21 mit Messern 22 angebracht sind. Zwischen den nahe den Enden des Kastens 19 liegenden Mähscheiben sind über dem Kasten noch weitere mit Messern 23 versehene Mähscheiben 24 angebracht.

Die Mähscheiben können von der Welle 6 ab mittels einer schematisch in der Figur angegebenen Hilfswelle 25 angetrieben werden, die mit einer aus einem der Zahnradgehäuse 18 herausragenden Welle 26 gekuppelt ist.

Die in den Zahnradgehäusen untergebrachten Zahnradübersetzungen sind durch eine im Tragbalken 17 liegende Welle miteinander gekuppelt. Ferner sind die Mähscheiben 24 mittels im Kasten 19 untergebrachter Zahnräder 27 mit einer der Mähscheiben 21 gekuppelt.

Zwischen dem vor der Buchse 14 herausragenden Ende der Welle 15 und einer an dem in Fig. 1 am meisten nach rechts angegebenen Zahnradgehäuse befestigten Stütze 28 ist ein Federmechanismus 29 angebracht. Fig. 3 zeigt insbesondere, dass der Federmechanismus eine Buchse 30 enthält, die mit Hilfe eines zur Schwenkwelle 16 parallelen Stifts 31 an der Stütze 28 angelenkt ist. In der Buchse 30 ist eine Druckfeder 32 untergebracht, die unter Vorspannung zwischen dem Stift 31 und einer Schüssel 33 eingesperrt ist, die an einer Stange 34 befestigt ist, deren Mittellinie sich wenigstens nahezu mit der Mittellinie der Buchse 30 deckt und die an dem von dem Stift 31 abgewandten Ende der Buchse 30 aus der Buchse durch eine ein Ende der Buchse 30 abschliessende Wand 35 mit einem Loch 36 herausragt. An dem freien, aus der Buchse herausragenden Ende der Stange 34 ist ein U-förmiger Bügel 37 befestigt, mittels dessen das betreffende Ende der Stange 34 mit Hilfe eines zu Stift 31 parallelen Stifts 38 an dem vor der Buchse 14 vorstehenden Ende der Welle 15 angelenkt ist.

In einem bestimmten Abstand von der Schüssel 33 ist an der Stange 34 noch eine weitere Schüssel 39 befestigt, die als ein mit der Stirnwand 35 der Buchse in Wirkverbindung stehender Anschlag wirksam ist. Die Ausbildung ist derart, dass in normalem Betrieb der Tragbalken 17 in Draufsicht (Fig. 1) sich wenigstens nahezu parallel zu den quer zur Fahrtrichtung verlaufenden Tragbalken 2 und 13 erstreckt, wobei die Schüssel 39 an der Stirnwand 35 der Buchse 30 anliegt und die Feder 32 in der beabsichtigten Weise vorgespannt ist.

Wenn, wie üblich, in normalem Betrieb die Vorrichtung in Richtung des Pfeils A fortbewegt wird und wenn das zweite Gestellteil 11 gegen einen Gegenstand stösst, kann sich das Gestellteil normalerweise nach dem Überwinden der von dem Verriegelungsmechanismus 12 ausgeübten Verriegelungskraft entgegen der Fahrtrichtung um die Schwenkwelle 9 rückwärts verschwenken.

Wenn jedoch das Gestellteil 11 an einer verhältnismässig nahe der Schwenkwelle 9 liegenden Stelle gegen einen Gegenstand stösst, kann es vorkommen, dass das dabei von der auf das Gestellteil 11 ausgeübten Kraft erzeugte Moment zu gering ist, um eine Verschwenkung um die Schwenkwelle 9 nach dem Überwinden der Verriegelungskraft des Verriegelungsmechanismus 12 herbeizuführen. Bei den bisher üblichen Konstruktionen kann es jedoch geschehen, dass infolge der dabei erzeugten Trägheitskräfte eine Beschädigung des Gestellteils 11 z. B. eine Verformung des Tragbalkens 13 hervorgerufen wird, wenn der Gegenstand den Tragbalken 13 nahe der Schwenkwelle 9 trifft.

Bei Verwendung der Konstruktion nach der Erfindung wird dies vermieden, da bei einer auf der zwischen der zweiten Schwenkwelle 16 und dem ersten Gestellteil (2) liegenden Seite des Tragbalkens 17 entgegen der Fahrtrichtung wirkenden Kraft ein Verschwenken dieser Seite des Tragbalkens 17 entgegen der Fahrtrichtung nach hinten entgegen der Wirkung des Federmechanismus 29 bewirkt. In dieser Weise werden die Trägheitskräfte, die sonst eine Verformung des Tragbalkens 13 hervorrufen könnten, vom Federmechanismus 29 aufgefangen, wobei die Bewegungsenergie der plötzlich zurückgehaltenen Masse, die sonst eine Beschädigung des zweiten Gestellteils 11 verursachen könnte, vom Federmechanismus 29 absorbiert wird.

Obgleich vorstehend eine landwirtschaftliche Maschine in Form einer Mähmaschine dargestellt ist, bei der die Bearbeitungswerkzeuge durch Mähscheiben gebildet werden, wird es einleuchten, dass die Konstruktion nach der Erfindung ebenfalls bei anderen landwirtschaftlichen Werkzeugen, z. B. bei Bodenbearbeitungsmaschinen oder Heumaschinen, verwendbar ist.

Es könnte z. B. auch ein Federmechanismus in Form einer um eine Verlängerung der Schwenkwelle 16 angebrachten Torsionsfeder oder dergleichen angebracht werden.

**Patentansprüche**

1. Einrichtung zum Verhindern der Überbeanspruchung der Verbindung zwischen zwei Gestellteilen einer an eine Zugmaschine ankuppelbaren, landwirtschaftlichen Maschine, die ein erstes (2) und ein zweites die Bearbeitungswerkzeuge (20, 21, 23, 24) tragendes Gestellteil (11) aufweist, wobei das erste Gestellteil (2) an der Zugmaschine ankuppelbar ist, sich nach der Ankupplung horizontal quer zur Fahrtrichtung erstreckt und an einem Ende mit einer sich aufwärts erstreckenden ersten Schwenkwelle (9) derart mit einem Ende des zweiten Gestellteils (11) verbunden ist, dass das zweite Gestellteil (11) das in Betriebszustand die axiale Verlängerung des ersten Gestellteils (2) bildet, sich bei Überschreitung einer entgegen der Fahrtrichtung auf es wirkenden Kraft entgegen der Fahrtrichtung nach hinten wegschwenkt, dadurch gekennzeichnet, dass die Bearbeitungswerkzeuge (20, 21, 23, 24) an einem Tragbalken (17) befestigt sind, der in seinem mittleren Bereich an dem zweiten Gestellteil (11) mit einer sich aufwärts erstreckenden zweiten Schwenkwelle (16) schwenkbar angekuppelt ist, wobei ein Federmechanismus (29) so zwischen dem zweiten Gestellteil (11) und dem Tragbalken (17) angeordnet ist, dass der Tragbalken (17) durch die Federkraft parallel zu den Gestellteilen (2, 11) ausgerichtet wird und eine auf die zwischen der zweiten Schwenkwelle (16) und dem ersten Gestellteil (2) liegenden Seite des Tragbalkens (17) entgegen der Fahrtrichtung wirkende Kraft ein Verschwenken dieser Seite des Tragbalkens (17) entgegen der Fahrtrichtung nach hinten und somit der anderen Seite des Tragbalkens (17) in Fahrtrichtung nach vorne entgegen der Federkraft bewirkt.

2. Einrichtung nach Anspruch 1, dadurch gekennzeichnet, dass der die Bearbeitungswerkzeuge (20, 21, 23, 24) tragende Tragbalken (17) aus der zu den Gestellteilen (2, 11) parallelen Betriebsstellung nur in einer Richtung verschwenken kann.

3. Einrichtung nach Anspruch 1 oder 2, dadurch gekennzeichnet, dass der Federmechanismus (29) zwischen einem Punkt (15) an dem von der ersten Schwenkwelle (9) abgewandten Ende des zweiten Gestellteils (11) und einem auf der in Betriebsstellung von der ersten Gelenkwelle (9) abgekehrten Seite des Tragbalkens (17) liegenden Punkt (31) wirkt, und dass der Federmechanismus (29) eine Buchse (30) mit einer darin angeordneten, vorgespannten Feder (32) aufweist, die mit einer relativ zur Buchse (30) verschiebbaren Stange (34), deren Verschiebbarkeit durch einen an ihr angeordneten Anschlag (34) begrenzt ist, in Wirkverbindung steht.

**Claims**

1. Apparatus for preventing the overloading of the connection between two frame parts of an agricultural machine which can be coupled to a towing machine and which comprises a first frame part (2) and a second frame part (11), supporting the working tools (20, 21, 23, 24) whereby the first frame part (2) can be coupled to the towing machine, extends after coupling horizontal transverse to the direction of travel and has been connected by means of an upwardly extending first pivot shaft (9) with one end of the second frame part so that said second frame part (11) forming during working the axial prolongation of the first frame part (2) by exceeding of a force acting thereon opposite to the direction of travel pivots rearwardly, caracterised in that the working tools (20, 21, 23, 24) have been mounted on a supporting beam (17) being coupled in its middle part to the second frame part (11) by means of an upwardly extending second pivot shaft (16) whereby has been provided a spring mechanism (29) between the second frame part (11) and the supporting beam (17) so that the supporting beam (17) is aligned by the spring force parallel to the frame parts (2, 11) and a force acting opposite to the direction of travel on the side of the supporting beam (17) situated between the second pivot shaft (16) and the first frame part (2) brings about a pivoting of said side of the supporting beam (17) opposite to the direction of travel rearwardly and so the other side of the supporting beam (17) in the direction of travel forwardly.

2. Apparatus according claim 1, characterised in that the supporting beam (17) supporting the working tools (20, 21, 23, 24) can pivot only in one direction from the working position parallel to the frame parts (2, 11).

3. Apparatus according claim 1 or 2, characterised in that the spring mechanism (29) acts between a point (15) on the end of the second frame part (11) remote from the first pivot shaft (9) and a point (31) situated on the side of the supporting beam (17) remote from the first pivot shaft (9) in the working position, and that the spring mechanism (29) comprises a sleeve (30) with a pre-stressed spring (32) mounted therein said spring being in working relation with a rod (34) which is shiftable relative to the sleeve (30), said shifting being limited by an abutment (34) mounted thereon.

**Revendications**

1. Dispositif pour éviter un effort excessif de la connexion entre deux parties de châssis d'une machine agricole, pouvant être attelée à un tracteur, qui comporte une première partie de châssis (2) et une seconde partie de châssis (11) portant les outils de travail (20, 21, 23, 24), la première partie de châssis (2) pouvant être attelée au tracteur, s'étendant horizontalement en direction de l'attelage, transversalement par rapport à la direction de déplacement, et étant couplée à une extrémité, par un premier arbre de pivotement (9) qui s'étend vers le haut, à une extrémité de la seconde partie de châssis (11) de manière que la seconde partie de châssis (11), qui en étant de service forme le prolongement axial de la première partie de bâti (2), s'écarte en pivotant vers l'arrière, dans le sens opposé au déplacement, lors du dépassement d'une force agissant sur celle-ci, dans le sens opposé au déplacement, caractérisé par le fait que les outils de travail (20, 21, 23, 24) sont fixés sur une poutre (17) qui, dans sa région centrale, est couplée de façon pivotante à la seconde partie de châssis (11) par un second arbre de pivotement (16) s'étendant vers le haut, un mécanisme à ressort (29) étant disposé entre la seconde partie de châssis (11) et la poutre (17) de manière que la poutre (17) soit orientée parallèlement aux parties de châssis (2, 11), sous l'action de la force du ressort, et qu'une force, agissant dans le sens opposé au déplacement sur le côté de la poutre (17) qui se trouve entre le second arbre de pivotement (16) et la première partie de châssis (2) provoque, à l'encontre de la force du ressort, un pivotement vers l'arrière, dans le sens opposé au déplacement, de ce côté de la poutre (17), et par conséquent un pivotement vers l'avant, dans le sens du déplacement, de l'autre côté de la poutre (17).

2. Dispositif suivant la revendication 1, caractérisé par le fait que la poutre (17), portant les outils de travail (20, 21, 23, 24) ne peut pivoter, hors de la position de service parallèle aux parties de châssis (2, 11), que dans une direction.

3. Dispositif suivant l'une des revendications 1 ou 2, caractérisé par le fait que le mécanisme à ressort (29) agit entre un point (15) situé sur l'extrémité de la seconde partie de châssis (11) qui est opposée au premier arbre de pivotement (9) et un point (31) se trouvant du côté de la poutre (17) qui est opposé au premier arbre d'articulation (9) en position de service, et que le mécanisme à ressort (29) comporte un manchon (30) avec un ressort prétendu (32) qui y est logé, et qui coopère avec une tige (34), pouvant se déplacer par rapport au manchon (30), dont la possibilité de déplacement est limitée par une butée (39) disposée sur cette tige.

FIG.1.

FIG.2.

FIG.3.